**Europäisches Patentamt**

**European Patent Office**

**Office européen des brevets**

(19)

(11) Numéro de publication: **0 012 670**
**B1**

(12) **FASCICULE DE BREVET EUROPEEN**

(45) Date de publication du fascicule du brevet: **24.03.82**

(51) Int. Cl.³: **C 05 F 11/00**

(21) Numéro de dépôt: **79400968.8**

(22) Date de dépôt: **05.12.79**

(54) Engrais composé de produits naturels.

(30) Priorité: **07.12.78 FR 7834467**
**23.02.79 FR 7904653**

(43) Date de publication de la demande:
**25.06.80 Bulletin 80/13**

(45) Mention de la délivrance du brevet:
**24.03.82 Bulletin 82/12**

(84) Etats contractants désignés:
**AT BE CH DE GB IT LU NL SE**

(56) Documents cités:
**FR - A - 836 655**
**FR - A - 2 287 943**
**US - A - 1 733 745**
**US - A - 3 630 710**

(73) Titulaire: **Lemaire, Jean-François**
**"Le Chêne" Ecouflant**
**F-49000 Angers (FR)**

(73) Titulaire: **Lemaire, Pierre-Bernard**
**"Epinay"**
**F-49170 Saint-Georges-sur-Loire (FR)**

(72) Inventeur: **Lemaire, Jean-François**
**"Le Chêne" Ecouflant**
**F-49000 Angers (FR)**
Inventeur: **Lemaire, Pierre-Bernard**
**"Epinay"**
**F-49170 Saint-Georges-sur-Loire (FR)**

(74) Mandataire: **Laget, Jean-Loup**
**Cabinet Pierre Loyer 18, Rue de Mogador**
**F-75009 Paris (FR)**

Courier Press, Leamington Spa, England.

Engrais composé de produits naturels

L'invention concerne un engrais composé de produits naturels.

L'agriculture a de plus en plus tendance à faire appel aux produits naturels pour l'enrichissement des sols. Cependant, ces produits naturels, s'ils sont utilisés individuellement, peuvent se révéler insuffisants, et il est de plus en plus nécessaire de procéder à des mélanges de produits naturels.

La présente invention a pour but la mise au point d'un engrais composé de produits naturels et susceptible d'être amélioré ou adapté en fonction des besoins spécifiques des sols.

L'invention a pour objet un engrais composé de produits naturels, du type comportant des nitrates naturels de sodium, une algue calcomagnésienne telle que le lithothamnium calcareum ou maerl, des phosphates naturels et un ou plusieurs produits pris dans le groupe comprenant l'oxyde de magnésium, le soufre, le sulfate de magnésium, l'oxyde de calcium, le cuivre, les oligoéléments et une algue brune, caractérisé en ce que les proportions en poids de produit sec des différents constituants sont comprises entre 20% et 88% pour les nitrates naturels, 1% et 25% pour l'algue calcomagnésienne, et 5% et 60% pour les phosphates naturels.

A titre d'illustration, on peut donner trois exemples de réalisation pratique d'engrais selon l'invention:

Exemple no 1.

| | |
|---|---|
| Nitrates du Chili | 20% |
| Algue calcomagnésienne (Lithothamne) | 15% |
| Phosphates de Gafsa à 28% | 10% |
| Phosphates d'alumine à 34% | 44% |
| Sulfat de magnésie | 15% |

Cet engrais est à utiliser en automne, à des doses comprises entre 50 et 300 kg. à l'hectare, en tant que fumure de fond pour céréales et prairies, pour des sols de pH compris entre 6, 5 et 8 environ.

Exemple no 2.

| | |
|---|---|
| Nitrates du Chili | 88% |
| Algue calcomagnésienne (Lithothamne) | 5% |
| Phosphates d'alumine | 7% |

Cet engrais doit être utilisé de préférence juste avant le printemps ou au début du printemps, à des doses de 50 à 250 kg. à l'hectare, pour répondre à certains impératifs agronomiques notamment pour céréales et prairies sur des sols de pH compris entre 5, 5 et 8 environ.

Exemple no 3.

| | |
|---|---|
| Nitrates du Chili | 20% |
| Lithothamne | 5% |
| Phosphates de Gafsa | 55% |
| Oxyde de magnésium naturel | 20% |

Cet engrais convient particulièrement en automne, à des doses de 50 à 300 kg. à l'hectare, comme fumure de fond notamment pour céréales et prairies, sur des sols acides ou très acides, de pH compris entre 5 et 6,5 environ.

Pour la prèparation de cet engrais, les différents constituants sont broyés et déshydratés, de façon à se présenter sous forme pulvérulente.

**Revendication**

Engrais composé de produits naturels, du type comportant des nitrates naturels de sodium, une algue calcomagnésienne telle que le lithothamnium calcareum ou maerl, des phosphates naturels et un ou plusieurs produits pris dans le groupe comprenant l'oxyde de magnésium, le soufre, le sulfate de magnésium, l'oxyde de calcium, le cuivre, les oligoéléments et un algue brune, caractérisé en ce que les proportions en poids de produit sec des différents constituants sont comprises entre 20% et 88% pour les nitrates naturels, 1% et 25% pour l'algue calcomagnésienne, et 5% et 60% pour les phosphates naturels.

**Claim**

Fertilizer including natural products, of the type comprising natural sodium nitrates, a calcomagnesian seaweed such as lithothamnium calcareum or maerl, natural phosphates and one or more products from the group comprising magnesium oxide, sulphur, magnesium sulphate, calcium oxide, copper, trace elements and a brown seaweed, characterized in that the proportions in weight of dry products of the various constituents are comprised between 20% and 88% for the natural nitrates, 1% and 25% for the calcomagnesian seaweed, and 5% and 60% for the natural phosphates.

**Patentanspruch**

Düngemittel aus Naturprodukten, bestehend aus natürlichen Natriumnitraten, einer Kalzium-Magnesium-Alge, z. B. Lithothamnium Calcareum oder Maerl, natürlichen Phosphaten und einem oder mehreren Bestandteilen der Gruppe enthaltend Magnesiumoxyd, Schwefel, Magnesiumsulfat, Kalziumoxyd, Kupfer, Spurenelemente und eine Braunalge, dadurch gekennzeichnet, dass es 20—88 Masse% natürliche Nitrate, 1—25 Masse% Kalzium-Magnesium-Alge und 5—60 Masse% natürliche Phosphate, bezogen auf Trockensubstanz, enthält.